# EUROPEAN PATENT SPECIFICATION

(11) **EP 0 666 492 B1**
(45) Date of publication and mention of the grant of the patent: **04.10.2001**
(21) Application number: 95300503.0
(22) Date of filing: 27.01.1995
(51) Int. Cl.: G02F 1/09

(54) **Magneto-optics shutter**
Magneto-optischer Verschluss
Obturateur magnéto-optique

(30) Priority: 08.02.1994 US 193308
(43) Date of publication of application: 09.08.1995
(73) Proprietor: TEXAS INSTRUMENTS INCORPORATED, Dallas, Texas 75243 (US)
(72) Inventor: Hynecek, Jaroslav, c/o Texas Instruments Inc., Dallas, Texas 75265 (US)
(74) Representative: Holt, Michael

(56) References cited:
- EP-A- 0 171 958
- GB-A- 2 065 908
- US-A- 3 554 636
- US-A- 3 927 930
- PATENT ABSTRACTS OF JAPAN vol. 10 no. 338 (P-516) ,15 November 1986 & JP-A-61 140926 (NOK CORP) 28 June 1986,
- PATENT ABSTRACTS OF JAPAN vol. 17 no. 58 (P-1481) ,4 February 1993 & JP-A-04 268539 (FUJITSU LTD) 24 September 1992,
- PATENT ABSTRACTS OF JAPAN vol. 11 no. 2 (P-532) ,6 January 1987 & JP-A-61 179423 (TAIHOO KOGYO KK) 12 August 1986,

## Description

### FIELD OF THE INVENTION

This invention generally relates to light shutter devices.

### BACKGROUND OF THE INVENTION

Without limiting the scope of the invention, its background is described in connection with a frame transfer image sensor, as an example. The operation of a frame transfer image sensor consists of two cycles: integration and readout. The image is integrated in one area and then shifted to another area (memory) from which it is sequentially scanned and read out. The memory area is shielded from impinging light. This architecture is very simple with good imaging performance. However, it has one major draw back. The image shift into the memory area cannot be arbitrarily fast. It is limited by the device internal time constants, power dissipation, etc. The finite transfer speed causes an image smear. Image smear is the result of light inducing a spurious signal into a previously captured image. This normally occurs when charge acquired by the photosites is being transferred to the memory section or output stage.

To eliminate the image smear several techniques have been developed. Interline transfer architecture, frame interline architecture, mechanical shutter, and, recently, a liquid crystal shutter. Each technique has some disadvantages which reduces the basic frame transfer device performance.

The liquid crystal shutter is one of the simplest approaches, but the liquid crystal shutter is slow and only about 25% transparent when opened. Another draw back of the liquid crystal shutter is the temperature dependency of its operating speed.

European Patent Application EP 0,171,958 discloses a light shutter comprising a plurality of transparent glass plates; a transparent carrier fluid positioned between the transparent plates; a plurality of magnetic platelets, which can be randomly shaped and which are suspended in the carrier fluid; and a switchable magnetic field such that, when the magnetic field is switched in a first state, the platelets will align in a direction that allows light to pass through the device, and, when the magnetic field is switched in a second state, the platelets will be oriented in a pattern that prevents light from passing through the device. In the latter state at least some of the platelets are randomly oriented.

Japanese Patent JP 61 140 926 discloses an optical shutter comprising metallic superfine magnetic particles which orient parallel to a magnetic field which is perpendicular to the plates when light can pass the shutter. Japanese Patent JP 4 268 539 discloses a light shutter wherein a switchable magnetic field is generated by a coil.

### SUMMARY OF THE INVENTION

The invention is characterized by a light shutter device according to claim 1.

There are many advantages of this invention. Several of those advantages are listed below. 1. The optical properties can be varied by selection of the platelet material, size, concentration and coating. 2. The speed of operation can be adjusted by a carrier fluid. Viscosity of the carrier fluid as well as temperature dependancy of the carrier fluid can be optimized. 3. Fabrication of the shutter is simpler than a liquid crystal shutter since no alignment of the crystals is necessary. 4. Low cost platelet fabrication is possible through the selection of the proper material and the platelet crystallization process. 5. The simple structure of the shutter can be attached to many existing devices to eliminate the image smear phenomenon. 6. A high contrast ratio can be achieved since no polarizers are necessary. 7. Performance close to a mechanical shutter can be achieved with no moving parts. This device will provide high performance and high reliability. 8. Long lifetime is expected from this device. Lifetime is expected to be better than for liquid crystal, since no DC current flows through the structure. 9. The shutter does not require any electrodes. 10. The wavelength of the light to be shuttered can be matched with the platelet size to optimize the contrast ratio and minimize the scattering. 11. This device is ideal for still video cameras which require a mechanical shutter. 12. Exposure can be easily controlled. 13. The device can be used in film cameras as well.

### BRIEF DESCRIPTION OF THE DRAWINGS

In the drawings:
FIG. 1 is a cross-section of a first preferred embodiment of the invention;
FIG. 2 is a perspective view of a platelet from the device of FIG. 1;
FIG. 3 is a cross section of a platelet with a thin coating of material for preventing sticking;
FIG. 4 is a perspective view of the magneto-optics shutter with a frame transfer image sensor;

Corresponding numerals and symbols in the different figures refer to corresponding parts unless otherwise indicated.

### DETAILED DESCRIPTION OF PREFERRED EMBODIMENTS

The present invention provides for a magnetic field dependent medium which functions as a light shutter without optical polarizers. The medium can be opened to allow light to freely pass through or it can be closed to allow little or no light to pass through. This novel approach allows light shutters such as liquid crystal to be replaced with magnetic field dependent mediums which function as light shutters without optical polarizers.

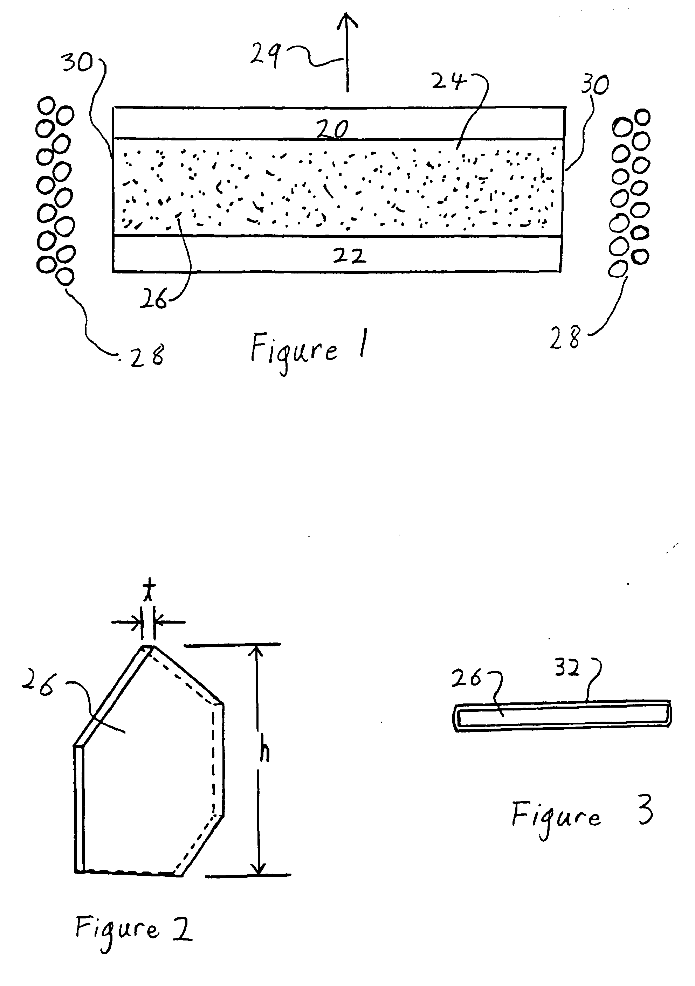

Illustrated in Figure 1 is a first preferred embodiment of the present invention. The first preferred embodiment includes transparent plates (glass) 20 and 22, carrier fluid 24, magnetic platelets 26, and magnetic field coil 28. The transparent plates 20 and 22 serve as a package for holding the carrier fluid 24. The fluid can be held in place at the sides 30 of the transparent plates 20 and 22 by a sealant such as an O-ring, epoxy, or low temp glass seal.

A switchable magnetic field perpendicular to the transparent plates 20 and 22 is provided by the magnetic field coil 28. By applying the magnetic field perpendicular to the transparent plates 20 and 22, the magnetic platelets 26 will align in the direction of the magnetic field. When the platelets 26 are aligned in the direction 29 of the magnetic field shown in Figure 1, there will be very little obstruction to light, with minimum scatter.

Platelet drift is critical with this device. The platelets 26 need to stay in suspension for optimum performance. To prevent the platelets 26 from drifting in the direction 29 of the magnetic field, it is possible to alternate the magnetic field polarity +/-. If this is accomplished fast enough the platelets 26 will stay in one place oriented in the direction 29 of the magnetic field.

When the field is switched off, the platelets 26 will randomly reorient themselves in an arbitrary pattern. This random orientation of the platelets 26 will prevent light from passing through the device. The random orientation can be accelerated by applying a rotating external field or an A/C field of an appropriate frequency. Also, a DC source (magnet) can be used to align the platelets 26 in the plane parallel to the transparent plates 20 and 22 to close the shutter.

The thickness of the platelets 26 needs to be small relative to the wavelength of light so that light can freely travel through the shutter in the open state. The platelets 26 are on the order of 500 to 2000 angstroms thick whereas the wavelength of light is on the order of 2000 to 7000 angstroms. An example of a preferred embodiment platelet 26 is shown in Figure 2. The platelets 26 have a random shape, but are very thin in one dimension. For example, in the preferred embodiment the platelets 26 could have the following dimensions: h=2 microns and t=500 angstroms, where h and t are shown in Figure 2. Another example of the platelet dimensions is h=1 micron and t=2000 angstroms. The optical properties of the device can be adjusted by the size and shape of the platelets 26.

The magnetic platelets 26 can be made of any of a variety of materials. The platelet material can be for example: iron, aronium iron, iron oxides, and other iron compounds (Fe, Fe₂O₃, Fe₂(SO₄)₃, Fe₂(SO₄)₃(NH₄)₂SO₄24H₂O); cerium (Ce); chromium compounds, chromium oxide (CrCl₃, CrO₃, Cr₂(SO₄)₂); cobalt compounds (Co₂O₃, CoSO₄) ; dysprosium oxide (Dy₂O₃); erbium compounds (Er₂O₃) ; gadolinium oxide, gadolinium sulfide, and other gadolinium compounds (Gd₂O₃, Gd₂(SO₄)₃) ; holmium compounds (HoCl₃, Ho(NO₃)₃, Ho₂O₃); manganese compounds (MuCl₂, MuO₂); nickel compounds (NiO, NiCl₂); praseodymium and praseodymium compounds (Pr); and ytterbium compounds (Yb₂O₃, YbCl₃). The platelets 26 can also be a combination of materials, including the materials listed above, to obtain the desired size and shape. The platelets 26 are coated with a very thin layer 32 of organic or inorganic material, as shown in Figure 3, to prevent platelet sticking. This can be important to prevent formation of large clumps of the platelets 26 which will not respond to the magnetic field.

The choice of the carrier fluid 24, including its surface tension to the platelet material, can be selected and optimized. Also the carrier fluid viscosity plays an important role to determine the speed of the response and randomness of the organization.

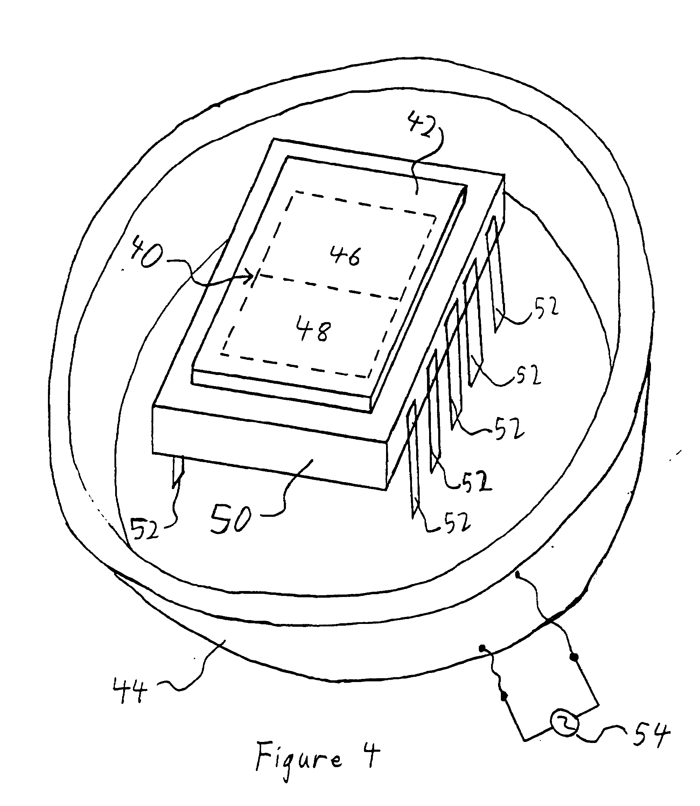

Referring to Figure 4, the magneto optics shutter of Figure 1 is shown with a frame transfer image sensor (image sensing circuitry) 40. The device of Figure 4 includes a shutter 42, a magnetic field coil 44, a frame transfer image sensor 40 having an image area 46 and a memory area 48, a molded package 50 containing the frame transfer image sensor 40, leads 52 from the image sensor 40, and a pulse generator 54. In the embodiment shown in Figure 4, one of the transparent plates of the shutter 42 is attached to the molded package 50 above the image sensor 40.

Since the image sensors are not sensitive to the magnetic field, a variety of configurations, pulses, and frequencies can be used. Various optimum geometries of the magnetic field coil 28 can be used. The magnetic field coil 28 can be wound tightly around the device package. It is also possible to use a permanent magnet and only a disrupting field coil.

There are many possible uses for this invention. One use for this invention is in cameras such as motion video cameras, still video cameras, and film cameras.

There are many advantages of this invention. Several of those advantages are listed below. 1. The optical properties can be varied by selection of the platelet material, size, concentration and coating. 2. The speed of operation can be adjusted by a carrier fluid. Viscosity of the carrier fluid as well as temperature dependancy of the carrier fluid can be optimized. 3. Fabrication of the shutter is simpler than a liquid crystal shutter since no alignment of the crystals is necessary. 4. Low cost platelet fabrication is possible through the selection of the proper material and the platelet crystallization process. 5. The simple structure of the shutter can be attached to many existing devices to eliminate the image smear phenomenon. 6. A high contrast ratio can be achieved since no polarizers are necessary. 7. Performance close to a mechanical shutter can be achieved with no moving parts. This device will provide high performance and high reliability. 8. Long lifetime is expected from this device. Lifetime is expected to be better than for liquid crystal, since no DC current flows through the structure. 9. The shutter does not require any electrodes. 10. The wavelength of the light to be shuttered can be matched with the platelet size to optimize the contrast ratio and minimize the scattering. 11. This device is ideal for still video cameras which require a mechanical shutter. 12. Exposure can be easily controlled. 13. The device can be used in film cameras as well.

A few preferred embodiments have been described in detail hereinabove. It is to be understood that the scope of the invention also comprehends embodiments different from those described, yet within the scope of the claims.

## Claims

1. A light shutter device comprising:
transparent plates (20;22);
a transparent carrier fluid (24) positioned between the transparent plates (20;22);
a plurality of magnetic platelets (26) suspended in the carrier fluid (24; and
a switchable magnetic field source (28) for Droviding a magnetic field such that, when the magnetic field source (28) is switched in a first state, the platelets (26) will align in a direction that allows light to pass through the device, and, when the magnetic field source (28) is switched in a second state, the platelets will be oriented in a pattern that prevents light from passing through the device;
**characterised in that** the platelets (26) are coated with a thin laver of material that prevents the platelets (26) from sticking together.

2. The device of claim 1, wherein the magnetic field is perpendicular to the transparent plates when switched in the first state.

3. The device of claim 1 or claim 2, wherein the magnetic field is off when switched in the second state.

4. The device of claim 3, wherein the platelets are randomly orientated when the magnetic field is off.

5. The device of any preceding claim, wherein the platelets are 500 to 2000 angstroms thick.

6. The device of any preceding claim, wherein the platelets have a random shape.

7. The device of any preceding claim, wherein the transparent plates are glass.

8. An apparatus for sensing an image comprising:
image sensing circuitry; and
a light shutter device according to claim 1 overlying the image sensor circuitry.

9. The apparatus of claim 8, wherein the image sensing circuitry is a frame transfer image sensor.

10. The apparatus of claim 8 or claim 9 further comprising:
a moulded package containing the image sensing circuitry.

11. The apparatus of claim 10, wherein one of the transparent plates is attached to an outside of the moulded package above the image sensing circuitry.

12. The apparatus of claim 10 or claim 11, wherein the magnetic field source comprises a magnetic field coil surrounding the moulded package.

13. The apparatus of claim 12 further comprising:
a pulse generator coupled to the magnetic coil for generating the magnetic field.

## Patentansprüche

1. Lichtblendenvorrichtung, mit:
lichtdurchlässigen Platten (20; 22);
einem lichtdurchlässigen Trägerfluid (24), das sich zwischen den lichtdurchlässigen Platten (20; 22) befindet;
mehreren magnetischen Plättchen (26), die in dem Tragerfluid (24) suspendiert sind; und
einer schaltbaren Magnetfeldquelle (28), die ein Magnetfeld erzeugt, derart, daß die Plättchen (26) dann, wenn die Magnetfeldquelle (28) in einen ersten Zustand geschaltet ist, sich auf eine Richtung ausrichten, die ermöglicht, daß Licht durch die Vorrichtung hindurchgeht, und dann, wenn die Magnetfeldquelle (28) in einen zweiten Zustand geschaltet ist, in einem Muster orientiert werden, das verhindert, daß Licht durch die Vorrichtung hindurchgeht;
**dadurch gekennzeichnet, daß** die Plättchen (26) mit einer dünnen Schicht aus einem Werkstoff beschichtet sind, der verhindert, **daß** die Plättchen (26) aneinanderhaften

2. Vorrichtung nach Anspruch 1, bei der das Magnetfeld senkrecht zu den lichtdurchlässigen Platten orientiert ist, wenn es in den ersten Zustand geschaltet ist.

3. Vorrichtung nach Anspruch 1 oder Anspruch 2, bei der das Magnetfeld abgeschaltet ist, wenn es in den zweiten Zustand geschaltet ist.

4. Vorrichtung nach Anspruch 3, bei der die Plättchen zufällig orientiert sind, wenn das Magnetfeld abgeschaltet ist.

5. Vorrichtung nach einem vorhergehenden Anspruch, bei der die Plättchen eine Dicke von 500 bis 2000 Ångström besitzen.

6. Vorrichtung nach einem vorhergehenden Anspruch, bei der die Plättchen eine zufällige Form besitzen.

7. Vorrichtung nach einem vorhergehenden Anspruch, bei der die lichtdurchlässigen Platten aus Glas sind.

8. Apparat zum Erfassen eines Bildes, mit:
einer Bilderfassungs-Schaltungsanordnung; und
einer Lichtblendenvorrichtung nach Anspruch 1, die über der Bildsensor-Schaltungsanordnung liegt.

9. Apparat nach Anspruch 8, bei dem die Bilderfassungs-Schaltungsanordnung ein Rahmenübertragungs-Bildsensor ist.

10. Apparat nach Anspruch 8 oder Anspruch 9, der ferner ein Gußgehäuse, das die Bilderfassungs-Schaltungsanordnung enthält, umfaßt.

11. Vorrichtung nach Anspruch 10, bei dem eine der lichtdurchlässigen Platten an einer Außenseite des Gußgehäuses über der Bilderfassungs-Schaltanordnung befestigt ist.

12. Apparat nach Anspruch 10 oder Anspruch 11, bei dem die Magnetfeldquelle eine Magnetfeldspule, die das Gußgehäuse umgibt, umfaßt.

13. Apparat nach Anspruch 12, der ferner umfaßt;
einen Impulsgenerator, der mit der Magnetspule gekoppelt ist, um das Magnetfeld zu erzeugen.

## Revendications

1. Dispositif formant obturateur de lumière comprenant :
des plaques transparentes (20;22);
un fluide porteur transparent (24) positionné entre les plaques transparentes (20;22);
une pluralité de plaquettes magnétiques (26) suspendues dans le fluide porteur (24); et
une source de champ magnétique commutable (28) pour délivrer un champ magnétique de telle sorte que lorsque la source de champ magnétique (28) est commutée dans un premier état, les plaquettes (26) s'alignent dans une direction qui laisse passer la lumière à travers le dispositif et, lorsque la source de champ magnétique (28) est commutée dans un second état, les plaquettes sont orientées selon une disposition qui empêche la lumière de traverser le dispositif;
**caractérisé en ce que** les plaquettes (26) sont recouvertes d'une mince couche de matériau qui empêche une adhérence réciproque des plaquettes (26).

2. Dispositif selon la revendication 1, dans lequel le champ magnétique est perpendiculaire aux plaquettes transparentes lorsqu'il est commuté dans le premier état.

3. Dispositif selon la revendication 1 ou la revendication 2, dans lequel le champ magnétique est interrompu lorsqu'il est commuté dans le second état.

4. Dispositif selon la revendication 3, dans lequel les plaquettes sont orientées de façon aléatoire lorsque le champ magnétique est interrompu.

5. Dispositif selon l'une quelconque des revendications précédentes, dans lequel les plaquettes possèdent une épaisseur comprise encre 500 et 2000 angströms.

6. Dispositif selon l'une quelconque des revendications précédentes, dans lequel les plaquettes possèdent une forme aléatoire.

7. Dispositif selon l'une quelconque des revendications précédentes, dans lequel les plaques transparentes sont en verre.

8. Dispositif pour émettre une image comprenant
un circuit de détection d'images; et
un dispositif formant obturateur de lumière selon la revendication 1, qui recouvre le circuit du détecteur d'images.

9. Dispositif selon la revendication 8, dans lequel le circuit de détection d'images est un détecteur d'images à transfert d'image complète.

10. Dispositif selon la revendication 8 ou la revendication 9, comprenant en outre :
un boîtier moulé contenant le circuit de détection d'images.

11. Dispositif selon la revendication 10, dans lequel l'une des plaques transparentes est fixée à l'extérieur du boîtier moulé au-dessus du circuit de détection d'images.

12. Dispositif selon la revendication 10 ou la revendication 11, dans lequel la source de champ magnétique comprend une bobine de champ magnétique entourant le boîtier moulé.

13. Dispositif selon la revendication 12, comprenant en outre :
un générateur d'impulsions couplé à la bobine magnétique pour générer le champ magnétique.
